# EUROPEAN PATENT APPLICATION

(11) **EP 3 128 786 A1**
(43) Date of publication of application: **08.02.2017**
(21) Application number: 14888217.8
(22) Date of filing: 09.06.2014
(51) Int. Cl.: H04W 36/14

(54) **METHODS AND DEVICES FOR SUPPORTING VOICE SERVICE SWITCHOVER BETWEEN CS DOMAIN AND PS DOMAIN AND MOBILE TERMINALS**

(30) Priority: 01.04.2014 CN 201410130004
(71) Applicant: ZTE Corporation, Shenzhen City, Guangdong Province 518057 (CN)
(72) Inventor: YANG, Xingsui, Shenzhen Guangdong 518057 (CN); WANG, Qilin, Shenzhen Guangdong 518057 (CN)
(74) Representative: Benson, Christopher
(86) International application number: PCT/CN2014/079525
(87) International publication number: WO 2015/149430

(57) **Abstract**

The present invention provides a method, apparatus and mobile terminal for supporting switching of a voice service between a CS domain and a PS domain, wherein the method and apparatus for switching a voice service from a CS domain to a PS domain is used for a first mobile terminal which has established a voice call with a second mobile terminal through a CS domain call connection, the method comprising: acquiring a CS domain voice service ID of the second mobile terminal after determining that the voice call with the second mobile terminal is switched from the CS domain to the PS domain; acquiring a PS domain voice service ID of the second mobile terminal according to a pre-stored mapping relationship between the CS domain voice service ID and the PS domain voice service ID of the second mobile terminal; establishing a PS domain call connection with the second mobile terminal according to the PS domain voice service ID; and switching the voice call with the second mobile terminal to the PS domain call connection and disconnecting the CS domain call connection. The present invention reduces the communication cost, there is no need to add network nodes, and a low cost can be achieved.

## Description

### Technical Field

The present invention relates to the field of communications, and in particular, to a method, apparatus and mobile terminal for supporting switching of a voice service between a Circuit Switch (CS) domain and a Packet Switch (PS) domain.

### Background of the Related Art

Mobile terminals such as smart phones and Mobile Internet Devices (MIDs) are becoming more popular, and cellular communication modules are integrated into such terminals. 1G cellular communication modules belong to an analog communication system, and can only implement voice call functions of CS domain. 2G/3G/4G cellular communication modules belong to a digital communication system, and have data services of PS domain in addition to a voice call function of the CS domain.

With the popularization of wireless network technologies, more and more mobile terminals integrate wireless communication modules, such as Wireless Fidelity (Wi-Fi), Worldwide Interoperability for Microwave Access (WiMax) and Zigbee (purple bee) etc. The wireless communication modules support data services of PS domain. Compared with the PS services in the cellular communication system, the wireless communication modules have a larger system capacity and a lower price.

In fact, no matter what kind of data services, voice call functions can be achieved in the PS domain through the Voice over Internet Protocol (VoIP) technology, which reduces the communication cost of users. By selecting an appropriate VoIP protocol and optimizing a network structure, VoIP services can also provide a quality of service which is comparable to that of cellular voice calls.

Because of the low cost of the voice call of the PS domain, it is ideal to implement voice calls in the PS domain. However, due to the instability and coverage problems of the wireless network, the use of the voice call of the PS domain by the mobile terminal is limited. If there is a way to achieve free switching voice calls between CS domain and PS domain, it will be excellent. In the prior art, in order to achieve the above-mentioned switching, it is required to add further network nodes and modify the network structure, which has a relatively high cost.

### Summary of the Invention

In view of this, the embodiments of the present invention provide a method, apparatus and mobile terminal for switching a voice service between a CS domain and a PS domain, to solve the problem in the prior art that it is required to add network nodes for switching a voice call seamlessly between a CS domain and a PS domain which has a high cost.

In order to solve the above problem, the embodiments of the present invention provide a method for switching a voice service from a Circuit Switch (CS) domain to a Packet Switch (PS) domain, applied to a first mobile terminal, wherein, the first terminal has established a voice call with a second mobile terminal through a PS domain call connection, the method comprising:
a first acquisition step: acquiring a CS domain voice service Identity (ID) of the second mobile terminal after determining that the voice call with the second mobile terminal is switched from the CS domain to the PS domain;
a second acquisition step: acquiring a PS domain voice service ID of the second mobile terminal according to a pre-stored mapping relationship between the CS domain voice service ID and the PS domain voice service ID of the second mobile terminal;
a first execution step: establishing a PS domain call connection with the second mobile terminal according to the PS domain voice service ID; and
a second execution step: switching the voice call with the second mobile terminal to the PS domain call connection and disconnecting the CS domain call connection.

Preferably, said determining that a voice call with the second mobile terminal is switched from the CS domain to the PS domain further comprises:
a first judgment step: judging whether there is any available network which supports the PS domain, and acquiring a first judgment result; and
a first determination step: when the first judgment result indicates that there is any available network which supports the PS domain, determining that the voice call with the second mobile terminal is switched from the CS domain to the PS domain.

Preferably, said switching the voice call with the second mobile terminal to the PS domain call connection further comprises:
a transmitting step: transmitting an audio route switching message to the second mobile terminal;
a second judgment step: judging whether a return message of the second mobile terminal is received within a predetermined time, and acquiring a second judgment result; and
a second execution sub-step: when the second judgment result indicates that the return message of the second mobile terminal is received within the predetermined time, switching the voice call with second mobile terminal to the PS domain call connection.

Preferably, the PS domain voice call adopts a Voice Over Internet Protocol (VoIP) technology.

Preferably, the network which supports the PS domain comprises: 1x-Evolution Data Optimized (EV-DO), Long Term Evolution (LTE), Wireless Fidelity (Wi-Fi) or Worldwide Interoperability for Microwave Access (WiMAX); and the network which supports the PS domain comprises: Global System for Mobile Communications (GSM) or Code Division Multiple Access (CDMA) 1x.

The embodiments of the present invention further provide a method for switching a voice service from a Packet Switch (PS) domain to a Circuit Switch (CS) domain, applied to a first mobile terminal, wherein, the first terminal has established a voice call with a second mobile terminal through a PS domain call connection, the method comprising:
a third acquisition step: acquiring a PS domain voice service Identity (ID) of the second mobile terminal after determining that the voice call with the second mobile terminal is switched from the PS domain to the CS domain;
a fourth acquisition step: acquiring a CS domain voice service ID of the second mobile terminal according to a pre-stored mapping relationship between the PS domain voice service ID and the CS domain voice service ID of the second mobile terminal;
a third execution step: establishing a CS domain call connection with the second mobile terminal according to the CS domain voice service ID; and
a fourth execution step: switching the voice call with the second mobile terminal to the CS domain call connection and disconnecting the PS domain call connection.

Preferably, said determining that a voice call with the second mobile terminal is switched from the PS domain to the CS domain further comprises:
a third judgment step: judging whether each of the networks which support the PS domain is unavailable, and acquiring a third judgment result;
a fourth judgment step: when the third judgment result indicates that each of the networks which support the PS domain is unavailable, judging whether there is any available network which supports the CS domain, and acquiring a fourth judgment result; and
a second determination step: when the fourth judgment result indicates that there is any available network which supports the CS domain, determining that the voice call with the second mobile terminal is switched from the PS domain to the CS domain.

The embodiments of the present invention further provide an apparatus for switching a voice service from a Circuit Switch (CS) domain to a Packet Switch (PS) domain, applied to a first mobile terminal, wherein, the first terminal has established a voice call with a second mobile terminal through a CS domain call connection, the apparatus comprising:
a first acquisition module: acquiring a CS domain voice service Identity (ID) of the second mobile terminal after determining that the voice call with the second mobile terminal is switched from the CS domain to the PS domain;
a second acquisition module: acquiring a PS domain voice service ID of the second mobile terminal according to a pre-stored mapping relationship between the CS domain voice service ID and the PS domain voice service ID of the second mobile terminal;
a first execution module: establishing a PS domain call connection with the second mobile terminal according to the PS domain voice service ID; and
a second execution module: switching the voice call with the second mobile terminal to the PS domain call connection and disconnecting the CS domain call connection.

Preferably, said determining that the voice call with the second mobile terminal is switched from the CS domain to the PS domain further comprises:
a first judgment unit: judging whether there is any available network which supports the PS domain, and acquiring a first judgment result; and
a first determination unit: when the first judgment result indicates that there is any available network which supports the PS domain, determining that the voice call with the second mobile terminal is switched from the CS domain to the PS domain.

Preferably, said switching the voice call with the second mobile terminal to the PS domain call connection further comprises:
a transmission unit: transmitting an audio route switching message to the second mobile terminal;
a second judgment unit: judging whether a return message of the second mobile terminal is received within a predetermined time, and acquiring a second judgment result; and
a second execution unit: when the second judgment result indicates that the return message of the second mobile terminal is received within the predetermined time, switching the voice call with second mobile terminal to the PS domain call connection.

The embodiments of the present invention further provide an apparatus for switching a voice service from a Packet Switch (PS) domain to a Circuit Switch (CS) domain, applied to a first mobile terminal, wherein, the first terminal has established a voice call with a second mobile terminal through a PS domain call connection, the apparatus comprising:
a third acquisition module: acquiring a PS domain voice service Identity (ID) of the second mobile terminal after determining that a voice call with the second mobile terminal is switched from the PS domain to the CS domain;
a fourth acquisition module: acquiring a CS domain voice service ID of the second mobile terminal according to a pre-stored mapping relationship between the PS domain voice service ID and the CS domain voice service ID of the second mobile terminal;
a third execution module: establishing a CS domain call connection with the second mobile terminal according to the CS domain voice service ID; and
a fourth execution module: switching the voice call with the second mobile terminal to the CS domain call connection and disconnecting the PS domain call connection.

Preferably, said determining that the voice call with the second mobile terminal is switched from the PS domain to the CS domain further comprises:
a third judgment unit: judging whether each of the networks which support the PS domain is unavailable, and acquiring a third judgment result;
a fourth judgment unit: when the third judgment result indicates that each of the networks which support the PS domain is unavailable, judging whether there is any available network which supports the CS domain , and acquiring a fourth judgment result; and
a second determination unit: when the fourth judgment result indicates that there is any available network which supports the CS domain, determining that the voice call with the second mobile terminal is switched from the PS domain to the CS domain.

The embodiments of the present invention further provide a mobile terminal for supporting switching of a voice service between a Circuit Switch (CS) domain and a Packet Switch (PS) domain, wherein the mobile terminal is a first mobile terminal and comprises:
a telephone module configured to establish a PS domain call connection with a PS domain voice service Identity (ID) of a second mobile terminal and establish a CS domain call connection with a CS domain voice service ID of the second mobile terminal;
a communication service state machine configured to judge whether a voice call with the second mobile terminal is switched from the CS domain to the PS domain or from the PS domain to the CS domain according to a network environment change;
a call state monitoring module configured to acquire the PS domain voice service ID through the CS domain voice service ID or acquire the CS domain voice service ID through the PS domain voice service ID according to a pre-stored mapping relationship between the CS domain voice service ID and the PS domain voice service ID of the second mobile terminal, and
a switching module configured to switch the voice call with the second mobile terminal to the PS domain call connection or switch the voice call with the second mobile terminal to the CS domain call connection and disconnect a current call connection.

When the network environment changes, in the technical scheme provided by the embodiments of the present invention, according to the mapping relationship, when a current call is implemented, another call connection with the second mobile terminalis established in the background, so that the first mobile terminal can freely switch voice between the CS domain and the PS domain without interrupting a normal voice call, which not only ensures the quality of the voice call, but also reduces the communication cost to the maximum extent, which has advantages that there is no need to add network nodes and a low cost can be achieved.

### Brief Description of Drawings

Fig. 1 is a flowchart of a method for switching a voice service from a CS domain to a PS domain according to an embodiment of the present invention;
Fig. 2 is a flowchart of a method for switching a voice service from a PS domain to a CS domain according to an embodiment of the present invention;
Fig. 3 is a structural diagram of an apparatus for switching a voice service from a CS domain to a PS domain according to an embodiment of the present invention;
Fig. 4 is a structural diagram of an apparatus for switching a voice service from a PS domain to a CS domain according to an embodiment of the present invention;
Fig. 5 is another flowchart of a method for switching a voice service from a CS domain to a PS domain according to an embodiment of the present invention;
Fig. 6 is another flowchart of a method for switching a voice service from a PS domain to a CS domain according to an embodiment of the present invention; and
Fig. 7 is a structural diagram of a mobile terminal which supports switching of a voice service between a CS domain and a PS domain according to an embodiment of the present invention.

### Preferred Embodiments of the Present Invention

In order to make the technical problem to be solved by the present invention, technical schemes and beneficial effects more clear, the present invention will be described in detail below in conjunction with accompanying drawings and specific embodiments.

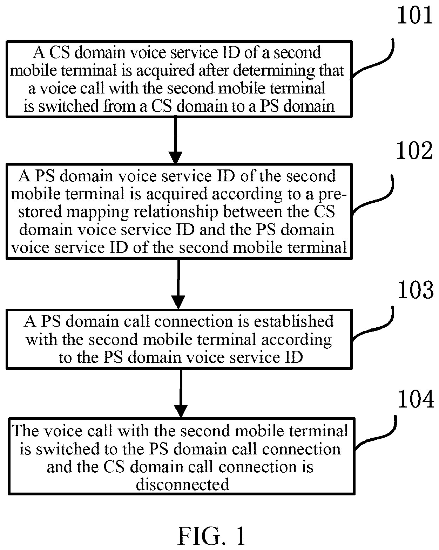

Fig. 1 is a flowchart of a method for switching a voice service from a CS domain to a PS domain according to an embodiment of the present invention. As shown in Fig. 1, the present invention provides a method for switching a voice service from a CS domain to a PS domain applied to a first mobile terminal, in which the first terminal has established a voice call with a second mobile terminal through a CS domain call connection, the method comprising the following steps.

In a first acquisition step 101, a CS domain voice service ID of the second mobile terminal is acquired after determining that a voice call with the second mobile terminal is switched from the CS domain to the PS domain;
in a second acquisition step 102, a PS domain voice service ID of the second mobile terminal is acquired according to a pre-stored mapping relationship between the CS domain voice service ID and the PS domain voice service ID of the second mobile terminal;
in a first execution step 103, a PS domain call connection is established with the second mobile terminal according to the PS domain voice service ID; and
in a second execution step 104, the voice call with the second mobile terminal is switched to the PS domain call connection and the CS domain call connection is disconnected.

With the method for switching a voice service from a CS domain to a PS domain of the above embodiment, according to the network environment change, the first mobile terminal acquires the PS domain voice service ID of the second mobile terminal according to the mapping relationship, and freely switches the type of the voice call with the second mobile terminal, i.e., after establishing the PS domain call connection between the first mobile terminal and the second mobile terminal in the background, automatically switches the voice call from the CS domain call connection to the PS domain call connection, which achieves seamless switching of the voice call.

In the above embodiment, the mapping relationship between the PS domain voice service ID and the CS domain voice service ID of the second mobile terminal is pre-stored in the first mobile terminal, which can be convenient for a user to query. Of course, establishment and update of the mapping relationship can also be achieved at the network side, and the user can query it in a database at the network side.

As a cost of a PS domain voice call is lower than that of a CS domain voice call, when it finds that there is an available PS domain network, the voice call can be switched to the PS domain. Determining that a voice call with the second mobile terminal is switched from the CS domain to the PS domain specifically comprises the following steps.

In a first judgment step, it is judged whether there is any available network which supports the PS domain and a first judgment result is acquired; and
in a first determination step, it is determined that the voice call with the second mobile terminal is switched from the CS domain to the PS domain when the first judgment result indicates that there is any available network which supports the PS domain.

In the present embodiment, in the process of the CS domain voice call, when the first mobile terminal finds that a PS domain network is available, it represents that both of CS domain and PS domain voice call services are available. In this case, in consideration of the cost of the communication, it is preferable to implement a voice call in the PS domain, and therefore it is selected to switch the service type of the voice call.

Before switching the voice from the CS domain to the PS domain, it needs to judge reliability of the PS domain. Switching the voice call with the second mobile terminal to the PS domain call connection specifically comprises the following steps.

In a transmission step, an audio route switching message is transmitted to the second mobile terminal;
in a second judgment step, it is judged whether a return message of the second mobile terminal is received within a predetermined time and a second judgment result is acquired; and
in a second execution sub-step, the voice call with second mobile terminal is switched to the PS domain call connection when the second judgment result indicates that the return message of the second mobile terminal is received within the predetermined time.

In the above embodiment, when the CS domain voice call is switched to the PS domain voice call, as the PS domain call connection is relatively weak, it firstly needs to determine whether the PS domain service is reliable, and as a result, an audio route switching message is firstly transmitted. If a response of the second mobile terminal is received within a predetermined time, the voice is switched to the PS domain call connection. Otherwise, the audio route switching message is transmitted repeatedly after the predetermined time, and when the number of retransmissions exceeds a defined value, it is considered that the PS domain service is unreliable, the PS domain call connection is disconnected, and the switching of the voice call is abandoned.

Preferably, the PS domain voice call adopts the VoIP technology. Of course, other technologies of transmitting voice in a form of data streams in the network may also be selected.

The network which supports the PS domain comprises 1x-Evolution Data Optimized (EV-DO), Long Term Evolution (LTE), Wi-Fi or WiMAX; and the network which supports the PS domain comprises Global System for Mobile Communications (GSM) or Code Division Multiple Access (CDMA) 1x.

Generally, voice is transmitted in the CS domain using communication technologies such as the GSM, Universal Mobile Telecommunications System (UMTS) or CDMA1x etc., and data is transmitted in the PS domain using communication technologies such as the 1xEV-DO, LTE, Wi-Fi or WiMAX etc. No matter for which data service, the PS domain voice call can be achieved using a suitable network technology.

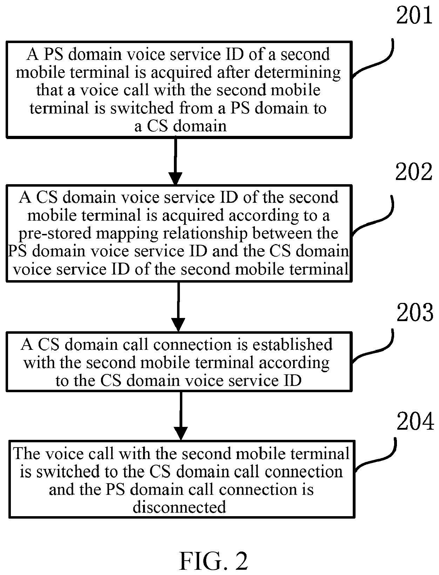

Fig. 2 is a flowchart of a method for switching a voice service from a PS domain to a CS domain according to an embodiment of the present invention. As shown in Fig. 2, the present invention further provides a method for switching a voice service from a PS domain to a CS domain applied to a first mobile terminal, in which the first terminal has established a voice call with a second mobile terminal through a PS domain call connection, the method comprising the following steps.

In a third acquisition step 201, a PS domain voice service ID of the second mobile terminal is acquired after determining that the voice call with the second mobile terminal is switched from the PS domain to the CS domain;
in a fourth acquisition step 202, a CS domain voice service ID of the second mobile terminal is acquired according to a pre-stored mapping relationship between the PS domain voice service ID and the CS domain voice service ID of the second mobile terminal;
in a third execution step 203, a CS domain call connection is established with the second mobile terminal according to the CS domain voice service ID; and
in a fourth execution step 204, the voice call with the second mobile terminal is switched to the CS domain call connection and the PS domain call connection is disconnected.

In the present embodiment, in the process of the PS domain voice call, if it finds that a network signal of the current voice call of the PS attenuates or disappears, it may firstly judge whether there are other available networks which can implement a PS domain voice call. If not, it is judged whether there are available networks which can implement a CS domain voice call, and if it finds that there are available networks which can implement a CS domain voice call, it is selected to switch the service type of the voice call. The technical scheme according to the present embodiment is still based on giving priority to the PS domain voice call.

The same mobile terminal may use multiple network technologies which support the PS domain voice call, for example, 1xEV-DO, LTE, Wi-Fi and/or WiMAX. Determining that a voice call with the second mobile terminal is switched from the PS domain to the CS domain specifically comprises the following steps.

In a third judgment step, it is judged whether each of the networks which support the PS domain is unavailable and a third judgment result is acquired;
in a fourth judgment step, it is judged whether there is any available network which supports the CS domain when the third judgment result indicates that each of the networks which support the PS domain is unavailable, and a fourth judgment result is acquired; and
in a second determination step, it is determined that the voice call with the second mobile terminal is switched from the PS domain to the CS domain when the fourth judgment result indicates that there is any available network which supports the CS domain.

When switching is implemented, it may be firstly judged whether other PS domain networks are available. In consideration of the cost, switching may be implemented in the PS domain, and if there is no PS domain network, CS domain networks are then considered.

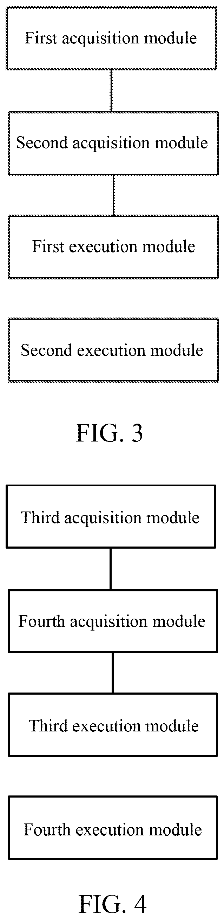

Fig. 3 is a structural diagram of an apparatus for switching a voice service from a CS domain to a PS domain according to an embodiment of the present invention. As shown in Fig. 3, the present invention further provides an apparatus for switching a voice service from a Circuit Switch (CS) domain to a Packet Switch (PS) domain applied to a first mobile terminal, the first terminal has established a voice call with a second mobile terminal over a CS domain call connection, the apparatus comprising:
a first acquisition module: acquiring a CS domain voice service Identity (ID) of the second mobile terminal after determining that a voice call with the second mobile terminal is switched from the CS domain to the PS domain;
a second acquisition module: acquiring a PS domain voice service ID of the second mobile terminal according to a pre-stored mapping relationship between the CS domain voice service ID and the PS domain voice service ID of the second mobile terminal;
a first execution module: establishing a PS domain call connection with the second mobile terminal according to the PS domain voice service ID; and
a second execution module: switching the voice call with the second mobile terminal to the PS domain call connection and disconnecting the CS domain call connection.

Preferably, said determining that a voice call with the second mobile terminal is switched from the CS domain to the PS domain further comprises:
a first judgment unit: judging whether there is any available network which supports the PS domain, and acquiring a first judgment result; and
a first determination unit: determining that the voice call with the second mobile terminal is switched from the CS domain to the PS domain when the first judgment result indicates that there is any available network which supports the PS domain.

Preferably, said switching the voice call with the second mobile terminal to the PS domain call connection further comprises:
a transmission unit: transmitting an audio route switching message to the second mobile terminal;
a second judgment unit: judging whether a return message of the second mobile terminal is received within predetermined time to acquire a second judgment result; and
a second execution unit: switching the voice call with second mobile terminal to the PS domain call connection when the second judgment result indicates that the return message of the second mobile terminal is received within the predetermined time.

Fig. 4 is a structural diagram of an apparatus for switching a voice service from a PS domain to a CS domain according to an embodiment of the present invention. As shown in Fig. 4, the present invention further provides an apparatus for switching a voice service from a Packet Switch (PS) domain to a Circuit Switch (CS) domain for a first mobile terminal which has established a voice call with a second mobile terminal over a PS domain call connection, the apparatus comprising:
a third acquisition module: acquiring a PS domain voice service Identity (ID) of the second mobile terminal after determining that a voice call with the second mobile terminal is switched from the PS domain to the CS domain;
a fourth acquisition module: acquiring a CS domain voice service ID of the second mobile terminal according to a pre-stored mapping relationship between the PS domain voice service ID and the CS domain voice service ID of the second mobile terminal;
a third execution module: establishing a CS domain call connection with the second mobile terminal according to the CS domain voice service ID; and
a fourth execution module: switching the voice call with the second mobile terminal to the CS domain call connection and disconnecting the PS domain call connection.

Preferably, said determining that a voice call with the second mobile terminal is switched from the PS domain to the CS domain further comprises:
a third judgment unit: judging whether each of the networks which support the PS domain is unavailable to acquire a third judgment result;
a fourth judgment unit: judging whether there is any available network which supports the CS domain when the third judgment result indicates that each of the networks which support the PS domain is unavailable, and acquiring a fourth judgment result; and
a second determination unit: determining that the voice call with the second mobile terminal is switched from the PS domain to the CS domain when the fourth judgment result indicates that there is any available network which supports the CS domain.

Specifically, through cooperation among the above various modules, the apparatus for switching a voice service from a PS domain to a CS domain according to the present embodiment enables the first mobile terminal to switch a voice call from the PS domain to the CS domain without interrupting a normal voice call, which not only ensures the quality of the voice call, but also needs not add network nodes, which has an advantage of a low cost.

The above embodiments are merely preferable embodiments of the present invention, and any combination or modification of the above embodiments should be included in the protection scope of the present invention.

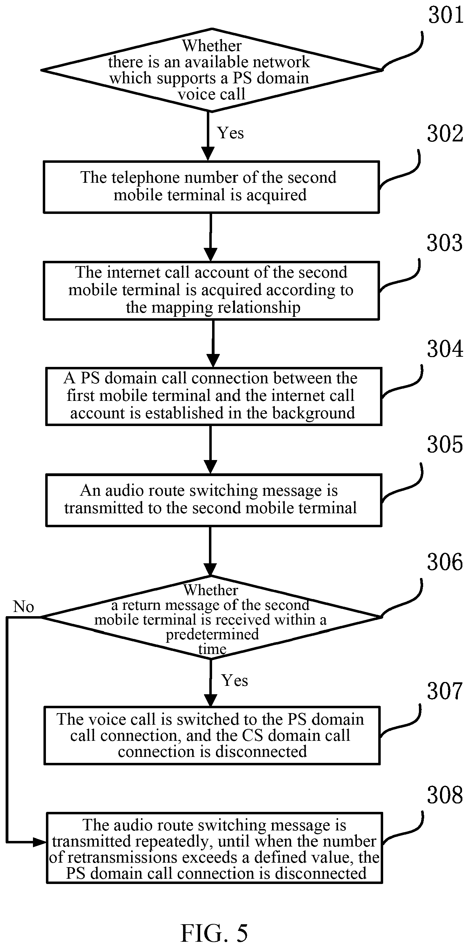

Fig. 5 is another flowchart of a method for switching a voice service from a CS domain to a PS domain according to an embodiment of the present invention. As shown in Fig. 5, the method for switching a voice service from a CS domain to a PS domain according to the present embodiment is used for a first mobile terminal which has established a CS domain call connection with a telephone number of a second mobile terminal. The CS domain call connection is achieved through a cellular network, and a voice call is implemented in the CS domain call connection. A mapping relationship between the telephone number of the second mobile terminal and an internet call account of the second mobile terminal is pre-stored in the first mobile terminal, and the PS domain voice call adopts the VoIP technology, the method comprising the following steps.

In step 301, it is judged whether there is an available network which supports a PS domain voice call and a first judgment result is acquired.

In the present embodiment, the network which supports the PS domain voice call may be networks such as 1xEV-DO, UMTS, LTE, Wi-Fi or WiMAX etc.

In step 302, when the first judgment result indicates that there is an available network which supports the PS domain voice call, the telephone number of the second mobile terminal is acquired.

As the PS domain voice call has a low cost, when it finds that there is an available network which supports the PS domain voice call, it is selected to switch the type of the voice call. Further, as the first mobile terminal has established a voice call with the telephone number of the second mobile terminal, the telephone number of the second mobile terminal can be acquired conveniently.

In step 303, the internet call account of the second mobile terminal is acquired according to the mapping relationship.

The CS domain voice call can be achieved using the circuit switch technology of the cellular network, and the PS domain voice call can be achieved using the VoIP technology through packet switching of the IP network. The voice call is implemented in the IP network, and the two parties of the call should possess internet call accounts which have functions similar to those of telephone numbers.

In step 304, a PS domain call connection between the first mobile terminal and the internet call account is established in the background.

If a PS domain service of the second mobile terminal is also available, the PS domain call can be established therebetween, and the PS domain call may be an Session Initiation Protocol (SIP) call. In order not to interrupt the current voice call, the PS domain call connection is established in the background to prepare for audio switching.

In step 305, an audio route switching message is transmitted to the second mobile terminal.

In step 306, it is judged whether a return message of the second mobile terminal is received within a predetermined time and a second judgment result is acquired.

In step 307, when the second judgment result indicates that the return message of the second mobile terminal is received within the predetermined time, the voice call is switched to the PS domain call connection, and the CS domain call connection is disconnected.

If the return message of the second mobile terminal is received within the predetermined time, it is considered that the PS domain service is available, and an operation of switching the voice call can be implemented.

In step 308, when the second judgment result indicates that no return message of the second mobile terminal is received within the predetermined time, the audio route switching message is transmitted repeatedly, until when the number of retransmissions exceeds a defined value, the PS domain call connection is disconnected.

If no return message of the second mobile terminal is received within the predetermined time, it is considered that the PS domain service is unreliable, and the operation of switching the voice call is abandoned.

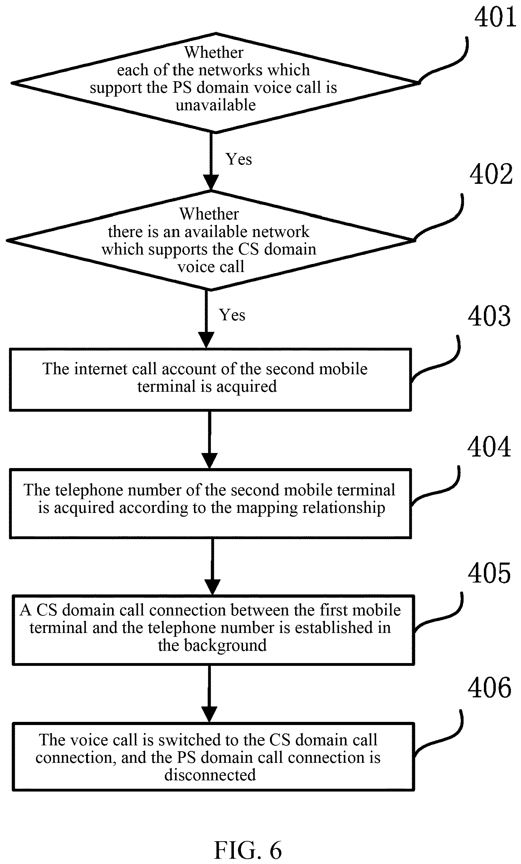

Fig. 6 is another flowchart of a method for switching a voice service from a PS domain to a CS domain according to an embodiment of the present invention. As shown in Fig. 6, the method for switching a voice service from a PS domain to a CS domain according to the present embodiment is used for a first mobile terminal which has established a PS domain call connection with an internet call account of a second mobile terminal. The PS domain call connection is achieved through an IP network, and a voice call is implemented in the PS domain call connection. A mapping relationship between the internet call account of the second mobile terminal and a telephone number of the second mobile terminal is pre-stored in the first mobile terminal, and the PS domain voice call adopts the VoIP technology, the method comprising the following steps.

In step 401, it is judged whether each of the networks which support the PS domain voice call is unavailable to acquire a first judgment result.

In step 402, when each of the networks which support the PS domain voice call is unavailable, it is judged whether there is an available network which supports the CS domain voice call to acquire a second judgment result.

In the present embodiment, the networks which support the CS domain voice call may be networks such as GSM, CDMA1x or UMTS etc.

In step 403, when the second judgment result indicates that there is an available network which supports the CS domain voice call, the internet call account of the second mobile terminal is acquired.

In step 404, the telephone number of the second mobile terminal is acquired according to the mapping relationship.

In step 405, a CS domain call connection between the first mobile terminal and the telephone number is established in the background.

If a CS domain service of the second mobile terminal is also available, the CS domain voice call can be established therebetween.

In step 406, the voice call is switched to the CS domain call connection, and the PS domain call connection is disconnected.

When the PS domain voice call is switched to the CS domain, as the CS domain voice call service is stronger than the PS domain voice call service, the voice can be switched directly.

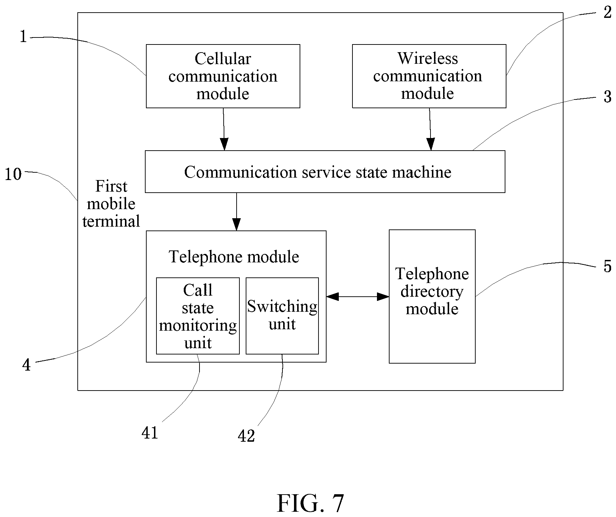

Fig. 7 is a structural diagram of a mobile terminal which supports switching of a voice service between a CS domain and a PS domain according to an embodiment of the present invention. As shown in Fig. 7, a mobile terminal which supports switching of a voice service between a CS domain and a PS domain according to the present embodiment is provided. The mobile terminal is a first mobile terminal 10, which comprises:
a cellular communication module 1 configured to search for a network which supports CS domain and PS domain voice calls and feed a search result back to a communication service state machine; wherein
the cellular communication module 1 supports communication technologies published by the 3GPP/3GPP2 organization, including GSM, UMTS, LTE, 1x, 1xEV-DO etc. In the present embodiment, the cellular communication module 1 may only support any one or more of the technologies described above. The cellular communication module supports CS domain voice call services, and also supports data services and internet call/VoIP services, i.e., PS domain voice call services.
a wireless communication module 2 configured to search for a network which supports a PS domain voice call and feed a search result back to the communication service state machine; wherein
the wireless communication module 2 supports one or more of communication technologies such as WiFi, WiMAX, Zigbee etc., can provide large capacity data communication services, and can provide PS domain voice call services in cooperation with the VoIP protocol;
the communication service state machine 3 configured to judge whether a voice call with the second mobile terminal is switched from the CS domain to the PS domain or from the PS domain to the CS domain according to a network environment change;
a telephone module 4 configured to establish a PS domain call connection with an internet call account of a second mobile terminal and establish a CS domain call connection with the phone number of the second mobile terminal; and
a telephone directory module 5 configured to store a mapping relationship between the telephone number and the internet call account of the second mobile terminal.

Wherein, the telephone module 4 specifically comprises:
a call state monitoring unit 41 configured to acquire a user ID of the second mobile terminal, and
a switching unit 42 configured to switch the voice call between the PS domain and the CS domain.

In a practical application process, the above various modules cooperate with each other, and a specific working process is as follows.

In the process of implementing a voice call between the first mobile terminal 10 and the second mobile terminal, firstly, the cellular communication module 1 and the wireless communication module 2 search for an available network, and feed a search result back to the communication service state machine 2. The communication service state machine 2 judges whether the voice call needs to be switched according to a network condition, and the basic judgment principle is to give preference to a network which supports the PS domain voice call. When it needs to switch the service type of the voice call, the telephone module 4 acquires a current call ID of the second mobile terminal through the call state monitoring unit 41, and then inquires for the telephone number or the internet call account corresponding to the current call ID through the telephone directory module 5. Then, the telephone module 4 establishes another call connection between the first mobile terminal 10 and the second mobile terminal in the background. After said another call connection is established, the switching unit 42 switches the voice call to said another call connection. Said another call connection may be a PS domain call connection or a CS domain call connection according to practical conditions.

The mobile terminal which supports switching of a voice service between a CS domain and a PS domain according to the present embodiment is used to support the method for switching a voice service from a CS domain to a PS domain or the method for switching a voice service from a PS domain to a CS domain according to any of the above embodiments.

The above description is preferable implementations of the present invention. It should be pointed out that a person having ordinary skill in the art can make a number of improvements and modifications without departing from the principle of the present invention, and these improvements and modifications should also be construed as belonging to the protection scope of the present invention.

### Industrial applicability

The technical solutions according to the embodiments of the present invention can be applied in wireless communications, for example, can be applied in a communication terminal, to achieve seamless switching of a voice call between a CS domain and a PS domain.

## Claims

1. A method for switching a voice service from a Circuit Switch, CS, domain to a Packet Switch, PS, domain, applied to a first mobile terminal, wherein the first terminal has established a voice call with a second mobile terminal through a CS domain call connection, the method comprising:
a first acquisition step: acquiring a CS domain voice service Identity, ID, of the second mobile terminal after determining that the voice call with the second mobile terminal is switched from the CS domain to the PS domain;
a second acquisition step: acquiring a PS domain voice service ID of the second mobile terminal according to a pre-stored mapping relationship between the CS domain voice service ID and the PS domain voice service ID of the second mobile terminal;
a first execution step: establishing a PS domain call connection with the second mobile terminal according to the PS domain voice service ID; and
a second execution step: switching the voice call with the second mobile terminal to the PS domain call connection and disconnecting the CS domain call connection.

2. The method according to claim 1, wherein said determining that the voice call with the second mobile terminal is switched from the CS domain to the PS domain further comprises:
a first judgment step: judging whether there is any available network which supports the PS domain, and acquiring a first judgment result; and
a first determination step: when the first judgment result indicates that there is any available network which supports the PS domain, determining that the voice call with the second mobile terminal is switched from the CS domain to the PS domain.

3. The method according to claim 1, wherein said switching the voice call with the second mobile terminal to the PS domain call connection further comprises:
a transmission step: transmitting an audio route switching message to the second mobile terminal;
a second judgment step: judging whether a return message of the second mobile terminal is received within predetermined time, and acquiring a second judgment result; and
a second execution sub-step: when the second judgment result indicates that the return message of the second mobile terminal is received within the predetermined time, switching the voice call with second mobile terminal to the PS domain call connection.

4. The method according to claim 1, wherein the PS domain voice call adopts the Voice Over Internet Protocol, VoIP, technology.

5. The method according to claim 2, wherein the network which supports the PS domain comprises: 1x-Evolution Data Optimized, EV-DO, Long Term Evolution, LTE, Wireless Fidelity, Wi-Fi, or Worldwide Interoperability for Microwave Access, WiMAX; and the network which supports the PS domain comprises Global System for Mobile Communications, GSM, or Code Division Multiple Access, CDMA1x.

6. A method for switching a voice service from a Packet Switch, PS, domain to a Circuit Switch, CS, domain, applied to a first mobile terminal, wherein the first terminal has established a voice call with a second mobile terminal through a PS domain call connection, the method comprising:
a third acquisition step: acquiring a PS domain voice service Identity, ID, of the second mobile terminal after determining that the voice call with the second mobile terminal is switched from the PS domain to the CS domain;
a fourth acquisition step: acquiring a CS domain voice service ID of the second mobile terminal according to a pre-stored mapping relationship between the PS domain voice service ID and the CS domain voice service ID of the second mobile terminal;
a third execution step: establishing a CS domain call connection with the second mobile terminal according to the CS domain voice service ID; and
a fourth execution step: switching the voice call with the second mobile terminal to the CS domain call connection and disconnecting the PS domain call connection.

7. The method according to claim 6, wherein said determining that the voice call with the second mobile terminal is switched from the PS domain to the CS domain further comprises:
a third judgment step: judging whether each of networks which support the PS domain is unavailable, and acquiring a third judgment result;
a fourth judgment step: when the third judgment result indicates that each of the networks which support the PS domain is unavailable, judging whether there is any available network which supports the CS domain and acquiring a fourth judgment result; and
a second determination step: when the fourth judgment result indicates that there is any available network which supports the CS domain, determining that the voice call with the second mobile terminal is switched from the PS domain to the CS domain.

8. An apparatus for switching a voice service from a Circuit Switch, CS, domain to a Packet Switch, PS, domain, applied to a first mobile terminal, wherein the first terminal has established a voice call with a second mobile terminal through a CS domain call connection, the apparatus comprising:
a first acquisition module: acquiring a CS domain voice service Identity, ID, of the second mobile terminal after determining that the voice call with the second mobile terminal is switched from the CS domain to the PS domain;
a second acquisition module: acquiring a PS domain voice service ID of the second mobile terminal according to a pre-stored mapping relationship between the CS domain voice service ID and the PS domain voice service ID of the second mobile terminal;
a first execution module: establishing a PS domain call connection with the second mobile terminal according to the PS domain voice service ID; and
a second execution module: switching the voice call with the second mobile terminal to the PS domain call connection and disconnecting the CS domain call connection.

9. The apparatus according to claim 8, wherein said determining that the voice call with the second mobile terminal is switched from the CS domain to the PS domain further comprises:
a first judgment unit: judging whether there is any available network which supports the PS domain, and acquiring a first judgment result; and
a first determination unit: when the first judgment result indicates that there is any available network which supports the PS domain, determining that the voice call with the second mobile terminal is switched from the CS domain to the PS domain.

10. The apparatus according to claim 8, wherein said switching the voice call with the second mobile terminal to the PS domain call connection further comprises:
a transmission unit: transmitting an audio route switching message to the second mobile terminal;
a second judgment unit: judging whether a return message of the second mobile terminal is received within predetermined time, and acquiring a second judgment result; and
a second execution unit: when the second judgment result indicates that the return message of the second mobile terminal is received within the predetermined time, switching the voice call with second mobile terminal to the PS domain call connection.

11. An apparatus for switching a voice service from a Packet Switch, PS, domain to a Circuit Switch, CS, domain, applied to a first mobile terminal, wherein the first terminal has established a voice call with a second mobile terminal through a PS domain call connection, the apparatus comprising:
a third acquisition module: acquiring a PS domain voice service Identity, ID, of the second mobile terminal after determining that the voice call with the second mobile terminal is switched from the PS domain to the CS domain;
a fourth acquisition module: acquiring a CS domain voice service ID of the second mobile terminal according to a pre-stored mapping relationship between the PS domain voice service ID and the CS domain voice service ID of the second mobile terminal;
a third execution module: establishing a CS domain call connection with the second mobile terminal according to the CS domain voice service ID; and
a fourth execution module: switching the voice call with the second mobile terminal to the CS domain call connection and disconnecting the PS domain call connection.

12. The apparatus according to claim 11, wherein said determining that the voice call with the second mobile terminal is switched from the PS domain to the CS domain further comprises:
a third judgment unit: judging whether each of networks which support the PS domain is unavailable and acquiring a third judgment result;
a fourth judgment unit: when the third judgment result indicates that each of the networks which support the PS domain is unavailable, judging whether there is any available network which supports the CS domain, and acquiring a fourth judgment result; and
a second determination unit: when the fourth judgment result indicates that there is any available network which supports the CS domain, determining that the voice call with the second mobile terminal is switched from the PS domain to the CS domain.

13. A mobile terminal for supporting switching of a voice service between a Circuit Switch, CS, domain and a Packet Switch, PS, domain, wherein the mobile terminal is a first mobile terminal and comprises:
a telephone module configured to establish a PS domain call connection with a PS domain voice service Identity, ID, of a second mobile terminal and establish a CS domain call connection with a CS domain voice service ID of the second mobile terminal;
a communication service state machine configured to judge whether a voice call with the second mobile terminal is switched from the CS domain to the PS domain or from the PS domain to the CS domain according to a network environment change;
a call state monitoring module configured to acquire the PS domain voice service ID through the CS domain voice service ID or acquire the CS domain voice service ID through the PS domain voice service ID according to a pre-stored mapping relationship between the CS domain voice service ID and the PS domain voice service ID of the second mobile terminal; and
a switching module configured to switch the voice call with the second mobile terminal to the PS domain call connection or switch the voice call with the second mobile terminal to the CS domain call connection and disconnect a current call connection.
